# EUROPEAN PATENT APPLICATION

(11) **EP 1 219 401 A2**
(43) Date of publication of application: **03.07.2002**
(21) Application number: 01310862.6
(22) Date of filing: 24.12.2001
(51) Int. Cl.: B29C 45/14, B29C 45/16, B29D 9/00, H05K 5/02

(54) **Resin injection molded article with reinforcing or decorative core**

(30) Priority: 29.12.2000 JP 2000404974
(71) Applicant: Nokia Corporation, 02150 Espoo (FI)
(72) Inventor: Kenichi, Hashizume, Kitagunma-gun, Gunma 370-3601 (JP); Tetsuya, Yamamoto, Chiba-shi, Chiba 263-0005 (JP)
(74) Representative: Style, Kelda Camilla Karen

(57) **Abstract**

A resin injection molded article comprising at least a two-dimensional reinforcing core material (11) formed into a non-planar shape, a resin surface (20) layer covering the surface of the core material, and a resin-made structural member (19) formed integrally with the resin surface layer and protruding from the resin surface layer, wherein the resin surface layer and the structural member are integrally molded by injection molding. The two-dimensional core material may be used as a design.

## Description

### BACKGROUND OF THE INVENTION

### Field of the Invention

The present invention relates to a resin molded article, and particularly it relates to a resin injection molded article having an internally reinforced structure with protruding structural members, which allows reduced thickness while maintaining strength for thin electronic device casings. The invention also provides a resin injection molded article comprising a decorative core layer, which is suitable for small-number production of diverse types.

### Description of the Related Art

Casings of small electronic devices such as cellular phones and personal computers have structural members which protrude out from the resin outer wall of the casing body, such as screw boss or slide stopper structures, battery holder partitions and the like, and therefore have complex structures which restrict the methods of molding which may be applied; for example, as cellular phones become smaller and more lightweight, with current cellular phone dimensions being approximately 10 x 4 cm, most casings are made of ABS resins or polycarbonate resins as thin as about 0.8-1.2 mm, and in some cases magnesium casings are also employed.

However, given cellular phone dimensions of approximately 10 x 4 cm with resin casings, a thickness of about 0.8 mm is not always sufficiently strong for products and it is even more difficult to reduce the thickness beyond this.

Future cellular phones are also expected to be even thinner with increased area for larger screens, and it is expected that even casings with the current thickness range of from 0.8 mm to 1.2 mm will have to meet demands for even higher elasticity and higher strength.

On the other hand, while it is possible to produce a thickness of less than 0.8 mm while maintaining sufficient strength, cost becomes a problem in light of poor manufacturing yields and the need for after treatment.

It is therefore an object of the present invention to provide a lighter-weight and smaller-sized, i.e. thinner, resin molded article, which also has a reinforced structure which maintains sufficient strength.

There is also a demand for achieving lower costs with multiple designs for the aforementioned resin-made casings in order to match increasing individualization (for personalized use) of cellular phones and the like, but because of the lower number of products in each manufacturing line when the number of designs is increased, it has been impossible to achieve lower cost production. Although desired designs can be obtained in a simple manner by printing methods, such designs are not only of lower durability but also increase the cost.

It is therefore another object of the present invention to provide a resin molded article with a core bearing a design by printing or the like, which satisfies both aspects of design individuality and cost reduction and increases the types of designs which may be applied.

### SUMMARY OF THE INVENTION

As a result of much diligent research, the present invention has been completed upon finding that the aforementioned problems can be solved by using a two-dimensional reinforcing core material such as a carbon fiber cloth as the reinforcing material for a resin injection molded article, and by using a decorative plastic core material as the core material for a resin injection molded article. Specifically, the invention provides the following.
(1) A resin injection molded article characterized by comprising at least a two-dimensional reinforcing core material formed into a non-planar shape, a resin surface layer covering the surface of the core material, and a resin-made structural member formed integrally with the resin surface layer and protruding from the resin surface layer, wherein the resin surface layer and the structural member are integrally molded by injection molding.
(2) A resin molded article according to (1), wherein the two-dimensional reinforcing core material is a fiber material such as a woven or knitted fabric, or such a fiber material impregnated with a resin.
(3) A resin molded article according to (2) above, wherein the fiber material is selected from among carbon fibers, glass fibers and aramid fibers.
(4) A resin molded article according to (2) above, wherein the fiber material is selected from among synthetic fibers such as nylon or polyester and natural fibers such as hemp or cotton.
(5) A resin molded article according to any one of (2) to (4) above, wherein the fiber material comprises metal fibers.
(6) A resin molded article according to any one of (1) to (5) above, wherein the fiber material is a fiber material impregnated with a thermoplastic resin.
(7) A resin molded article according to (6) above, wherein said thermoplastic resin an acrylic resin, polyamide resin, polyester resin, polypropylene resin, ABS resin, polycarbonate resin, polypropylene-ethylene resin or a modification or blend of these resins.
(8) A resin molded article according to any one of (2) to (7) above, wherein the resin surface layer and the fiber material-impregnating resin are composed of the same material.
(9) A resin molded article according to any one of (1) to (8) above, wherein at least one part of the resin surface layer is a transparent resin layer.
(10) A resin molded article according to (9) above, wherein the two-dimensional reinforcing core material under the transparent resin layer is provided with a design such as a picture, a drawing, characters, a pattern or the like.
(11) A resin molded article according to any one of (1) to (10) above, which is an electronic device casing or a part thereof.
(12) A resin molded article according to any one of (1) to (10) above, which is a portable electronic device casing or a part thereof.
(13) A resin molded article characterized by comprising at least a two-dimensional decorative core material, a resin surface layer covering the surface of the core material, and a resin-made structural member formed integrally with the resin surface layer and protruding from the resin surface layer, wherein part of the resin surface layer covering the design of the core material is transparent, and the resin surface layer and the structural member are integrally molded by injection molding.
(14) A resin molded article according to (13) above, wherein said two-dimensional core material is made of paper, plastic, metal, a fiber product film, sheet or net, or a laminate thereof.
(15) A resin molded article according to (13) or (14) above, wherein the two-dimensional core material is provided with a design such as a picture, a drawing, characters, a pattern or the like.

### BRIEF DESCRIPTION OF THE DRAWINGS

Fig. 1 shows a casing of a cellular phone as a suitable embodiment of a resin injection molded article with a reinforcing core according to the invention.
Fig. 2 is a diagram illustrating the manufacturing steps for a resin injection molded article with a reinforcing core according to the invention.
Figs. 3(a) and 3(b) is a diagram illustrating the injection molding steps for a resin injection molded article with a reinforcing core according to the invention.
Fig. 4 shows a partial cross-sectional side view of part of a resin injection molded article according to the invention.
Fig. 5 shows an embodiment of a resin injection molded article with a decorative core according to the invention.

### PREFERRED EMBODIMENTS OF THE INVENTION

According to one aspect of the resin molded article of the invention, it comprises a two-dimensional reinforcing core material formed into a non-planar shape.

By comprising a two-dimensional reinforcing core material it is possible to maintain strength even with small thicknesses, thus contributing to lighter weight and smaller size.

The two-dimensional reinforcing core material which may be used for the invention is not particularly restricted so long as it can impart higher strength than the simple resin molded article, but a fiber material such as a woven or knitted fabric, or such a fiber material impregnated with a resin, is preferably used. Particularly preferred for use are high-strength fiber materials such as carbon fibers, glass fibers or aramid fibers, fiber materials composed of synthetic fibers such as nylon or polyester or natural fibers such as hemp or cotton, and metal fiber-containing materials. High-strength fiber materials such as carbon fibers, glass fibers or aramid fibers are most preferred because they exhibit high strength with small thicknesses.

Fiber materials which are constructed in the form of woven or knitted fabrics, such as glass cloths, cotton fabrics and the like, are preferred because the mutual weaving of the fibers produces excellent elasticity, impact resistance and a reinforcing effect in the shear direction, while a cosmetic effect can also be exhibited by the casing material obtained by the weave pattern. There may also be used a nonwoven fabric wherein the constituent fibers are bonded by a bonding material.

The fiber material is preferably impregnated with a thermoplastic resin beforehand. This not only increases the wettability and bonding strength of the surface resin layer, but also prevents the resin of the surface resin layer from easily infiltrating the fiber material during subsequent molding of the surface layer. Impregnation of a thermoplastic resin also facilitates preforming of the two-dimensional reinforcing core material. Since a thermoplastic resin is used for injection molding, using a thermoplastic resin as the impregnating resin as well can increase the bonding strength with the surface layer resin.

As examples of such thermoplastic resins there may be mentioned acrylic resins, polyamide resins, polyester resins, polypropylene resins, ABS resins, polycarbonate resins, polypropylene-ethylene resins and modifications or blends of these resins. Modifications or blends of ABS resins and polycarbonate resins are preferred.

Metal sheets or metal nets may also be used instead of such fiber materials.

The two-dimensional reinforcing core material for the resin molded article of the invention is characterized by not having a mere planar shape, but for example, being formed into a three-dimensional shape such as the shape of a casing. Thus, the two-dimensional reinforcing core material is preformed before injection molding of the surface resin layer.

The method of forming the two-dimensional reinforcing core material of the invention may be any conventional known forming method. A pressing or hot-pressing may be used. For example, a sandwich structure with the resin-impregnated fiber material or woven fabric sandwiched between thermoplastic resin sheets on both sides may be pressed with a mold and the inside of the mold heated to obtain a molded article. The resin is preferably exposed on the surface of the molded fiber material.

According to another aspect of the resin molded article of the invention, the surface of the molded two-dimensional reinforcing core material body has a resin surface layer and a resin-made structural member formed integrally with the resin surface layer and protruding from the resin surface layer.

This is because the present invention is a resin molded article having a complex shape such as that of a cellular phone casing, which employs a two-dimensional reinforcing core material as a reinforcing material to permit smaller thickness while maintaining strength. No technical difficulty is involved in merely forming a resin surface layer on the surface of a two-dimensional reinforcing core material body. For example, the surface of the two-dimensional reinforcing core material body may simply be coated with the resin. However, a smaller thickness makes it more difficult to form a resin surface layer and a resin structural member, which is formed integrally with the resin surface layer and protruding from the resin surface layer, on the surface of the molded two-dimensional reinforcing core material body.

For the purpose of the resin molded article of the present invention, a structural member protruding from the surface layer means, for example, a casing screw boss or slide stopper structure, a battery holder partition, a reinforcing rib, a part anchoring structure, or the like. The protruding structural member is made of a resin, and in the case of a casing screw boss, for example, it may include a member other than the resin, such as a metal nut, simultaneously insertion molded at the tip of the resin boss.

The resin surface layer and the protruding resin structural member of the resin molded article of the invention are integrally molded. Molding the resin-made protruding structural member integrally with the resin molded article body will maintain the bonding strength. Particularly in the case of a resin-made protruding structural member on the surface of a thin resin surface layer, as according to the invention, it is effective not only to integrally mold the resin-made protruding structural member with the resin surface layer, but also to mold the resin surface layer in such a manner that it covers the total surface of the resin molded article. This is because when the resin surface layer integrally molded with the protruding structural member covers only a part of the surface of the two-dimensional reinforcing core material, the integral protruding structural member and resin surface layer tend to peel from the two-dimensional reinforcing core material. Consequently, the resin surface layer of the resin molded article of the invention is preferably a continuous layer which covers the majority of the front and back of the resin molded article. It most preferably covers the entire surface, from the standpoint of maintaining high bonding strength of the resin-made protruding structural member. However, from the standpoint of the design or the manufacturing process, a portion of the two-dimensional reinforcing core material may be exposed.

The resin of the resin surface layer and protruding resin member is not particularly restricted, but it is preferably a thermoplastic resin such as an acrylic resin, polyamide resin, polyester resin, polypropylene resin, ABS resin, polycarbonate resin, polypropylene-ethylene resin or a modification or blend of these resins. Modifications or blends of ABS resins and polycarbonate resins are preferred.

The resin used for the resin surface layer and protruding resin member may also be composed of two or more resins, depending on the part, so long as the resin surface layer and protruding resin member are integrally molded. The strength and other functions, or the aspects of printing, aesthetic quality, etc. may also be considered. For example, the outside of the casing (the resin surface layer) may be composed of a transparent resin (or a semi-transparent or colored transparent resin) to contribute to the aesthetic quality.

If the resin surface layer is composed of only a transparent resin, it is possible to construct a design with the two-dimensional reinforcing core material itself. The design quality is particularly high with fiber materials, metal nets and the like. However, further providing the core material with a design such as a picture, a drawing, characters, a pattern or the like can yield products with diverse designs. Paper or plastic films provided with pictures used for decorative purposes are usually of such a nature that they may be directly used as two-dimensional reinforcing core materials according to the invention.

Regardless of whether or not the core material is used for a decorative purpose, the outside of the resin surface layer of the resin molded article of the invention may still be printed, or have an embellishing or protective layer formed thereover.

According to another aspect of the resin molded article of the invention, the resin surface layer and the protruding resin member are integrally molded with the molded two-dimensional reinforcing core material by injection molding.

Injection molding is the most suitable method of molding resin molded articles with complex shapes having resin-made structural members protruding from the resin body, as according to the invention. However, while for conventional injection molding methods there is known manufacture of composite resin structures by two-color-part molding, sandwich molding, etc. or manufacture of composite structures wherein a different material is mounted on the resin molded article by outside molding or the like, no injection molding method is known for embedding a reinforcing core material into the interior. This is because, in the case of molding under high pressure such as with injection molding, it is impossible to hold the core material with a core or the like.

Nevertheless, upon diligent research by the present inventors it was found that by setting a preformed two-dimensional reinforcing core material in a mold, injection molding a resin on one surface of the two-dimensional reinforcing core material and then injection molding the resin on the other side as well, it is possible to accomplish injection molding whereby the preformed two-dimensional reinforcing core material is embedded in the interior, and that this method allows the two-dimensional reinforcing core material to be placed at any desired position and uniformly situated inside the molded article. In addition, it was confirmed that by modifying the conventional two-color-part molding process it is possible to accomplish embedded injection molding of a two-dimensional reinforcing core material by secondary injection using two different molds, with a single injection molding apparatus. It was also confirmed that, since the labor for carrying out two molding steps can thereby be eliminated, the process may be applied with advantages in terms of manufacturing cost. In other words, by performing a primary injection of the resin on one surface of the two-dimensional reinforcing core material and then transferring and switching the mold to perform a second injection on the other side of the two-dimensional reinforcing core material, it is possible to produce an embedded-type resin injection molded article according to the present invention. Conventionally, manufacturing of resin molding articles reinforced with two-dimensional reinforcing core materials such as according to the invention has required a manufacturing process extending over long periods of time based on methods using vacuum bags instead of injection molding methods, and with the conventional processes it has been difficult to mold high-strength resin-made protruding structural members.

According to the invention, the aforementioned molding process may be employed to provide in a practical and economical manner a resin molded article characterized by comprising at least a two-dimensional reinforcing core material formed into a non-planar shape, a resin surface layer covering the surface of the core material, and a resin-made structural member formed integrally with the resin surface layer and protruding from the resin surface layer, wherein the resin surface layer and the structural member are integrally molded by injection molding.

Particularly as concerns casings of small electronic devices, since the present invention allows manufacture of considerable high-strength casings at the same thicknesses as conventional injection molded products with thicknesses of 0.8-1.2 mm, due to reinforcement with two-dimensional reinforcing core materials, and also provides casings with sufficient strength at even smaller thicknesses, it can contribute to thinner, lighter-weight and smaller devices. Portable communication devices with casings or casing sections thinner than 0.8 mm, for example, 0.6 mm, are possible.

As mentioned above, the present invention proposes a simple and inexpensive manufacturing process to produce resin molded articles with complex shapes and comprising a core material, by an injection molding method, and this manufacturing process may be utilized for core-material containing resin injection molded articles that are to be decorated, irrespective of any reinforcing purpose. Thus, according to the invention there is provided a resin molded article characterized by comprising at least a decorative two-dimensional core material, a resin surface layer covering the surface of the core material, and a resin-made structural member formed integrally with the resin surface layer and protruding from the resin surface layer, wherein the resin surface layer which covers the design section of the core material is transparent, and the resin surface layer and said structural member are integrally molded by injection molding.

The core material used for decoration may be a film, sheet or net of paper, plastic, metal, fibers or the like, or a laminate thereof, and any of these core materials may be used as desired, either utilizing the patterns of fiber fabrics for clothing or woven fabrics such as carbon fiber cloths, or with pictures, drawings, characters, patterns or the like printed on paper or films.

This decorated resin molded article construction and manufacturing process may be basically the same as for the aforementioned resin molded article employing a two-dimensional reinforcing core material, but there is greater freedom in selecting the materials and process since the goal of reinforcement by the core material is not a restriction. For example, a decorative core material is not limited to three-dimensional preforming and, if reinforcement is not a major objective, the core layer area need only include the section necessary for the design. Plastic films and the like may also be used as a core if desired. Naturally, as was mentioned above, since paper, film, woven fabrics and other such core materials commonly used as decorative bases are two-dimensional core materials, they generally have the effect of improving the tensile strength, shear strength and impact resistance of resin molded articles, and all of these function as the two-dimensional reinforcing core materials.

The conventional methods of modifying resin molded articles such as electronic device casings have included methods of printing onto the molded articles, attaching decorated labels or films onto the molded articles, and printing on films with transfer ink and then inserting the films into dies and molding them to transfer the printed patterns onto the molded articles; however, since such methods form designs on the surfaces they have been prone to peeling by friction or impact, or wear by rubbing, etc. According to the invention, however, it is possible to form a transparent resin layer by injection molding as a surface layer on a decorative core material, thus providing an effect which maintains the outer aesthetic appearance for long periods while preventing external friction or scratches from directly affecting the design.

### EXAMPLES

Examples will now be explained with reference to the attached drawings.

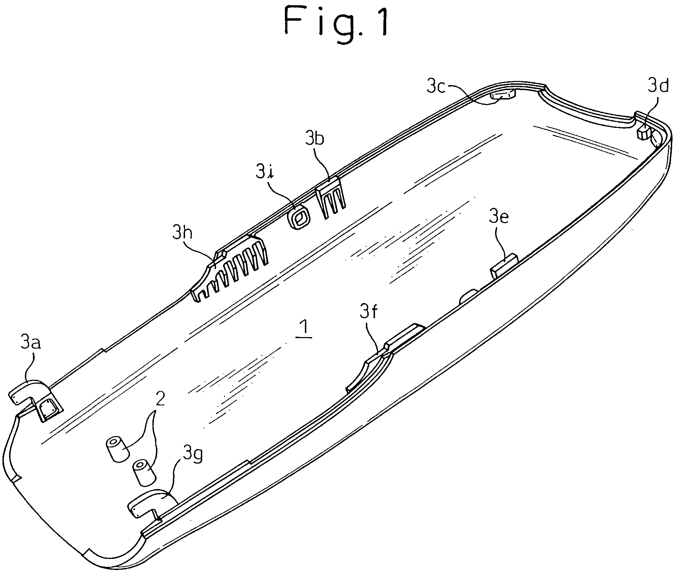

Fig. 1 shows the casing of a cellular phone as a preferred embodiment for application of the resin molded article of the invention.

In Fig. 1, the casing body 1 is not planar and, for example, a case with dimensions of about 10 cm (length) x about 4 cm (width) x about 1 cm (height). The thickness is about 0.8-1.2 mm. Inside the casing body 1, structural members such as nut-embedded screw bosses 2 and fitting structures 3a, 3b, 3c, 3d, 3e, 3f, 3g, 3h, etc. protrude out from the casing outer wall. In this embodiment, the only resin-made protruding structural members are the screw bosses and the fitting structures, but others may also be included. The resin-made protruding structural members are difficult to form without injection molding because of their shapes and required strength.

The present invention embeds a two-dimensional reinforcing core material for reinforcement in order to provide strength to thin products with such complex shapes.

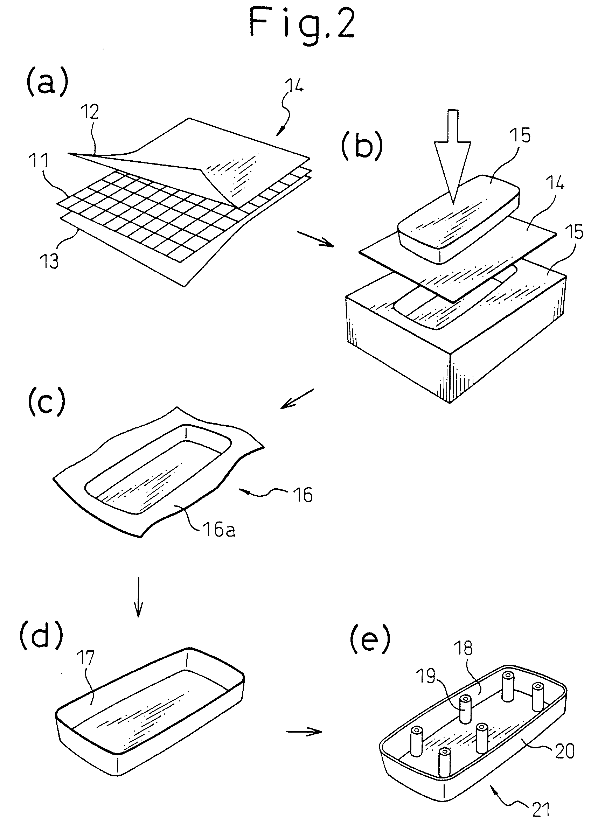

Referring to Fig. 2(a), a laminate sheet 14 composed of a carbon fiber cloth 11 sandwiched between thermoplastic resin sheets 12, 13 is prepared as a typical example of a two-dimensional reinforcing core material. Alternatively, the two-dimensional reinforcing core material may be a sheet or prepreg comprising a reinforcing fiber material already impregnated with a thermoplastic resin. The thermoplastic resin is preferably polycarbonate. In any case, impregnation of the two-dimensional reinforcing core material with a thermoplastic resin is preferred for the purpose of the invention because otherwise the bonding strength between the injection molding resin and the reinforcing fiber material is reduced. It is generally difficult to impregnate a thermoplastic resin into the mesh of a reinforcing fiber material during injection molding.

The laminate sheet 14 or prepreg is pressed and heated using a molding die 15 as shown in Fig. 2(b), for premolding into the desired shape. With a laminate sheet 14, the thermoplastic resin is impregnated into the reinforcing fiber material simultaneously with the molding.

As shown in Fig. 2(c), the unwanted edges 16a of the laminate sheet 16 premolded with the die 15 are trimmed, to obtain the desired two-dimensional reinforcing core material preform 17, as shown in Fig. 2(d).

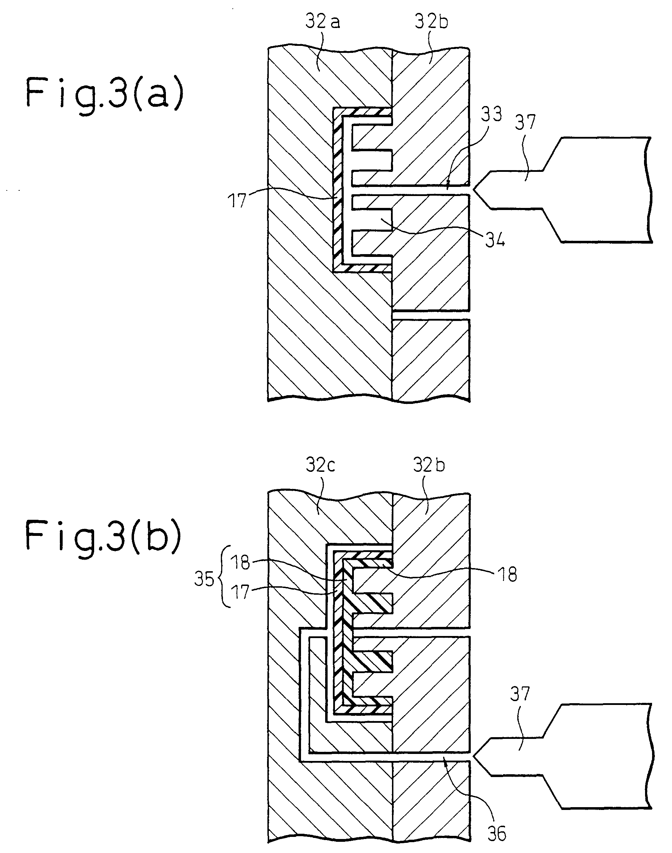

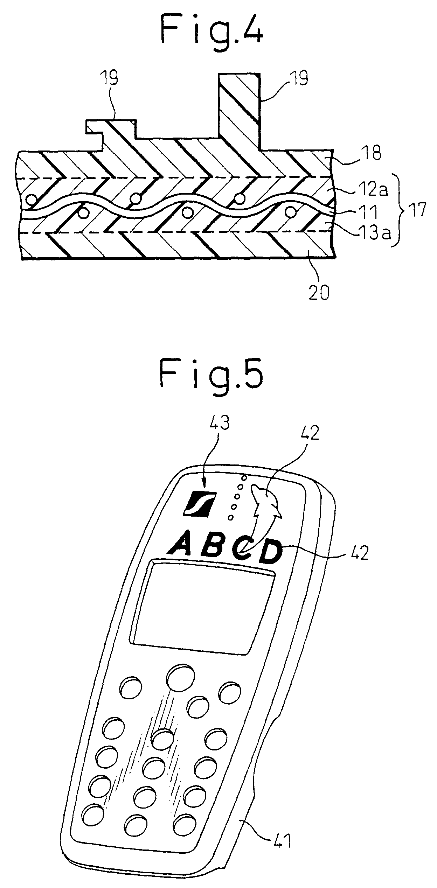

Next, with reference to Fig. 3(a), the preform 17 is set in the die 32a, 32b of an injection molding apparatus. The preform 17 is held on the side of one half 32a of the die and a thermoplastic resin is injected into the cavity 34 inside the preform 17 through the sprue and runner 33 of the other half 32b of the die from the nozzle 37 of the injection molding apparatus so that, as seen in Fig. 2(e) and Fig. 4, the inner surface of the preform 17 is covered with the resin surface layer 18 while the protruding structural members 19 such as bosses and the like are formed integrally with the resin surface layer 18 on the inner surface of the preform 17. In this manner of injection molding, the resin-made protruding structural members 19 are formed while the resin surface layer 18 covers one surface (inner surface) of the two-dimensional reinforcing core material preform 17 so that the resin-made protruding structural members 19 are molded integrally with the resin surface layer 18, but since a thermoplastic resin is impregnated in the reinforcing fiber material 11 of the two-dimensional reinforcing core material preform 17, the molding accomplishes firm bonding of the core material and the resin surface layer 18 as well as firm integral bonding between the resin surface layer 18 and the resin-made protruding structural members 19, as with conventional injection molding methods. A primary injection molded article 35 is thus obtained (not shown in Fig. 2 and Fig. 3(a); see Fig. 3(b)).

According to the invention, secondary injection molding is also carried out on the outer surface of the primary injection molded article 35. This is because by covering the entirety instead of only one side of the two-dimensional reinforcing core material, it is possible to obtain a product with a reinforced structure wherein the two-dimensional reinforcing core material is embedded in the interior of a conventional injection molded article. Embedding of the two-dimensional reinforcing core material in the interior improves the strength. If the injection molded resin layer formed on the surface of the two-dimensional reinforcing core material is only on one side or is not continuous even if formed on both sides, the strength may be insufficient with molded articles having thin or complex shapes. However, as mentioned above, it is not necessary for the injection molded resin layer to cover the entire surface of the two-dimensional reinforcing core material so long as adequate strength can be achieved. A casing 21 having its entirety (both sides) covered with the injection molding resin layers 18, 20 is thus obtained, as shown in Fig. 2(e) and Fig. 4.

For the secondary injection molding, the molded article completed by the primary injection molding may be taken out of the die and set in a separate die in a different injection molding apparatus for injection molding on the outer surface of the casing, in order to accomplish injection molding covering both sides of the two-dimensional reinforcing core material. However, referring to Fig. 3(b), by using an injection molding apparatus which allows switching between two dies, such as a two-color-part molding apparatus, as the injection molding apparatus, with modification so that the resin is injected from the opposite side of the two-dimensional reinforcing core material in the primary injection molding and secondary injection molding, it is possible to accomplish injection molding in a manner that covers both sides (the entirety) of the two-dimensional reinforcing core material using a single injection molding apparatus and by merely switching dies, thereby allowing reinforcement with the two-dimensional reinforcing core material by a simple manufacturing step and without increased cost. For example, as shown in Fig. 3(b), the half-die 32a may be transferred and replaced with a different half-die 32c, the primary injection molded article 35 held from the inside of the molded article 35 and the resin to be injected sent via a nozzle 37 through a different sprue and runner 36 from the sprue and runner 33, for molding on the outside of the molded article 35.

Fig. 4 shows a partial cross-sectional side view of part of a resin injection molded article obtained in this manner. The two-dimensional reinforcing core material 11 is sandwiched between two surface resin layers 18, 20, and at least one of the surface resin layers 18 has a resin-made protruding member 19.

Fig. 5 shows an embodiment of a resin molded article which employs the core material for a decorative purpose. In this embodiment, a design 42 such as characters, a pattern or the like is provided on the core material of the casing 41 of a cellular phone and a transparent resin 43 is used as the surface resin layer, in order to create a durable design. Also, by using a transparent resin layer as the surface resin layer as mentioned above, a see-through type design form may be obtained for display of a material originally intended for reinforcement, such as a reinforcing fiber cloth.

## Claims

1. A resin injection molded article **characterized by** comprising at least a two-dimensional reinforcing core material formed into a non-planar shape, a resin surface layer covering the surface of said core material, and a resin-made structural member formed integrally with said resin surface layer and protruding from the resin surface layer, wherein said resin surface layer and said structural member are integrally molded by injection molding.

2. A resin injection molded article according to claim 1, wherein said two-dimensional reinforcing core material is a fiber material such as a woven or knitted fabric, or such a fiber material impregnated with a resin.

3. A resin injection molded article according to claim 2, wherein said fiber material is selected from among carbon fibers, glass fibers and aramid fibers.

4. A resin injection molded article according to claim 2, wherein said fiber material is selected from among synthetic fibers such as nylon or polyester and natural fibers such as hemp or cotton.

5. A resin injection molded article according to claim 2, 3 or 4, wherein said fiber material comprises metal fibers.

6. A resin injection molded article according to any one of claims 1 to 5, wherein said fiber material is a fiber material impregnated with a thermoplastic resin.

7. A resin injection molded article according to claim 6, wherein said thermoplastic resin is an acrylic resin, polyamide resin, polyester resin, polypropylene resin, ABS resin, polycarbonate resin, polypropylene-ethylene resin or a modification or blend of these resins.

8. A resin injection molded article according to any one of claims 2 to 7, wherein said resin surface layer and said fiber material-impregnating resin are composed of the same material.

9. A resin injection molded article according to any one of claims 1 to 8, wherein at least one part of said resin surface layer is a transparent resin layer.

10. A resin injection molded article according to claim 9, wherein said two-dimensional reinforcing core material is provided with a design such as a picture, a drawing, characters, a pattern or the like, and the transparent resin layer lies over it.

11. A resin injection molded article according to any one of claims 1 to 10, which is an electronic device casing or a part thereof.

12. A resin injection molded article according to any one of claims 1 to 10, which is a portable electronic device casing or a part thereof.

13. A resin injection molded article **characterized by** comprising at least a two-dimensional decorative core material, a resin surface layer covering the surface of said core material, and a resin-made structural member formed integrally with said resin surface layer and protruding from the resin surface layer, wherein at least a part of the resin surface layer covering the design of said core material is transparent, and said resin surface layer and said structural members are integrally molded by injection molding.

14. A resin injection molded article according to claim 13, wherein said two-dimensional core material is a film, sheet or net made of paper, plastic, metal, fiber product or the like, or a laminate thereof.

15. A resin injection molded article according to claim 13 or 14, wherein said two-dimensional core material is provided with a design such as a picture, a drawing, characters, a pattern or the like.
